# EUROPÄISCHE PATENTANMELDUNG

(11) **EP 0 661 225 A1**
(43) Veröffentlichungstag der Anmeldung: **05.07.1995**
(21) Anmeldenummer: 94120274.9
(22) Anmeldetag: 21.12.1994
(51) Int. Cl.: B65G 7/12

(54) **Vorrichtung zum Erfassen und Transportieren eines quaderförmigen Gegenstandes**

(30) Priorität: 22.12.1993 DE 4343913
(71) Anmelder: BIMOCO GmbH & Co. KG., D-52224 Stolberg (DE)
(72) Erfinder: Thiele, Erwin, D-53840 Troisdorf (DE)
(74) Vertreter: Bauer, Hubert, Dipl.-Ing.

(57) **Zusammenfassung**

Um eine Vorrichtung zum Erfassen und Transportieren eines quaderförmigen Gegenstandes, insbesondere einer Batterie preiswert herstellen, einfach montieren sowie demontieren und außerhalb ihres Einsatzes platzsparend unterbringen zu können, wird ein einstückig aus Kunststoff geformter Tragbügel vorgeschlagen. Dieser ist mit einem zu einem Handgriff ausgebildeten Mittelstück (2) ausgestattet. Dessen Enden gehen jeweils in ein Seitenstück (5) über, an dem ein Tragarm (8) und eine Lasche (9) über ein Gelenk (10) angeschlossen sind. Jeder Tragarm (8) ist in einer abwärts gerichteten Schwenkposition mit dem freien Ende der Lasche (9) kuppelbar und verriegelbar. Dabei steht eine am unteren Ende des Tragarmes (8) angeformte Aufnahmeleiste (15) mit einer Längsseite zur Vorrichtungsmitte hin vor.

## Beschreibung

Die Erfindung betrifft eine Vorrichtung zum Erfassen und Transportieren eines quaderförmigen Gegenstandes, insbesondere einer Batterie.

Es sind Traktions- und Starterbatterien sowie ähnliche gewichtsträchtige Batterien allgemein bekannt, die mit Einrichtungen zum Erfassen und Transportieren dieser Gegenstände ausgestattet sind. Die unlösbar angebrachten Schlaufen oder Bügel umfassenden Einrichtungen sind häufig in der Einbauposition der Batterien hinderlich. Entweder fehlt es an Platz für die Unterbringung der über Außenflächen der Batterien vorstehenden Einrichtungsteile oder aber diese haben soviel Bewegungsfreiheit, daß eine zusätzliche Fixierung der von den Batterien abstehenden Teile erforderlich ist.

Der Erfindung liegt die Aufgabe zugrunde, eine Vorrichtung der eingangs angegebenen Art vorzuschlagen, die preiswert herstellbar ist, einfach montiert und demontiert werden kann und sich außerhalb ihres Einsatzes platzsparend unterbringen läßt.

Zur Lösung dieser Aufgabe wird eine Vorrichtung vorgeschlagen, welche einen einstückig aus Kunststoff geformten Tragbügel umfaßt, der mit einem zu einem Handgriff ausgebildeten Mittelstück versehen ist, dessen Enden jeweils in ein Seitenstück übergehen, an dem ein Tragarm und eine Lasche über je ein Gelenk angeschlossen sind, wobei der Tragarm in einer abwärts gerichteten Schwenkposition mit dem freien Ende der Lasche kuppelbar und so fixierbar ist, daß eine am unteren Ende des Tragarmes angeformte Aufnahmeleiste mit einer Längsseite zur Vorrichtungsmitte hin vorsteht.

Die erfindungsgemäße Vorrichtung läßt sich als ein einteiliges Kunststoffspritzgußteil herstellen, wobei die gelenkige Verbindung der beiden Tragarme und der beiden Laschen an den vom Mittelstück in entgegengesetzten Richtungen abstehenden Seitenstücken über sogenannte Filmscharniere erfolgen kann. Diese erlauben es, die Vorrichtung insgesamt als langgestrecktes flaches Kunststoffteil zu spritzen und die Tragarme sowie die Laschen erst dann aus der Fertigungsebene herauszuschwenken, wenn die Vorrichtung zum Einsatz kommt. Ebenso läßt sich die Vorrichtung nach ihrem Einsatz in die flache Fertigungsebene zurückverformen und in diesem platzsparenden Zustand für einen erneuten Einsatz bereithalten.

Nach einer besonders vorteilhaften Ausgestaltung der Erfindung nimmt jedes Seitenstück in der Breite von seinem am Mittelstück angeschlossenen Ende aus bis zu seinem mit dem Tragarm gelenkig verbundenen Ende hin zu, wobei im Mittelstück ein bis in den Tragarm hineinreichender erster Ausschnitt zur Plazierung der Lasche im gestreckten Zustand der Vorrichtung und im Tragarm ein zweiter Ausschnitt zum Hindurchführen des Endes der Lasche in der abgewinkelten Schwenkposition des Tragarmes vorgesehen sind.

Durch diese Ausgestaltung bieten die ersten beiden Ausschnitte jeweils einen Freiraum, so daß in einer verhältnismäßig flachen Form nicht nur das Mittelstück, die beiden Seitenstücke und die beiden Tragarme, sondern in den durch die beiden Ausschnitte geschaffenen Freiräumen auch die beiden Laschen in einem zusammenhängenden Formnest Platz finden. Durch die beiden zweiten Ausschnitte in den Tragarmen läßt sich in deren abgewinkeltem Gebrauchszustand das jeweilige Ende einer Lasche hindurchführen und so mit dem jeweiligen Tragarm verriegeln, daß dieser fixiert und dadurch insbesondere daran gehindert ist, aus der abgewinkelten Position zurück in eine gestrecktere Position zu schwenken.

Um die Laschenenden in einfacher Weise mit dem jeweiligen Tragarm ver- und entriegeln zu können, sieht eine weitere Ausgestaltung der Erfindung vor, daß die Ausschnitte T-förmig ausgebildet sind und daß der T-Steg jedes ersten Ausschnittes in abgewinkelter Position des jeweiligen Tragarmes nach oben weist und daß jeweils ein im gestreckten Zustand der Vorrichtung in einem ersten Ausschnitt plaziertes Endstück der jeweiligen Lasche von einer Seite aus durch den T-förmigen Flansch des jeweiligen zweiten Ausschnittes hindurchführbar ist und nach einer Verschwenkung der Lasche bis in den T-Steg hinein auf der anderen Seite der Lasche verriegelbar ist.

Während also die ersten T-förmigen Ausschnitte zur Plazierung der Laschen mit ihrem jeweils knebelförmigen Endstück im gestreckten Formenzustand dienen, bezwecken die zweiten T-förmigen Ausschnitte die Hindurchführbarkeit der Laschenenden und deren Verriegelbarkeit mit den im Gebrauchszustand der Vorrichtung abwärts geschwenkten Tragarmen.

In der Zeichnung ist ein Ausführungsbeispiel der erfindungsgemäßen Vorrichtungen im Gebrauchszustand dargestellt. Es zeigt:
- Fig. 1: eine Ansicht auf eine Breitseite,
- Fig. 2: eine Ansicht auf eine Schmalseite,
- Fig. 3: eine Draufsicht.

Die Vorrichtung besteht aus einem einstückigen Kunststoffbügel 1. Dieser weist ein Mittelstück 2 auf, das einen auf seiner Unterseite mit ergonomischen Fingermulden 3 und auf seiner Oberseite mit verstärkenden Rippen 4 versehenen Handgriff bildet.

An beiden Seiten des Mittelstücks 2 ist jeweils ein Seitenstück 5 angeformt, das auf seiner Oberseite mit Verstärkungsrippen 6 versehen ist. Die Seitenstücke 5 sind trapezförmig ausgebildet und nehmen nach außen hin in ihrer Breite zu. Das jeweils dem Mittelstück 2 abgewandte Ende jedes Seitenstücks 5 ist über ein Filmscharnier 7 mit einem Tragarm 8 verbunden.

An jedem Seitenstück 5 ist in der Nähe des Mittelstücks 2 eine Lasche 9 über ein Filmscharnier 10 angelenkt. Die Lasche 9 ist mit einem knebelförmigen Endstück 11 versehen.

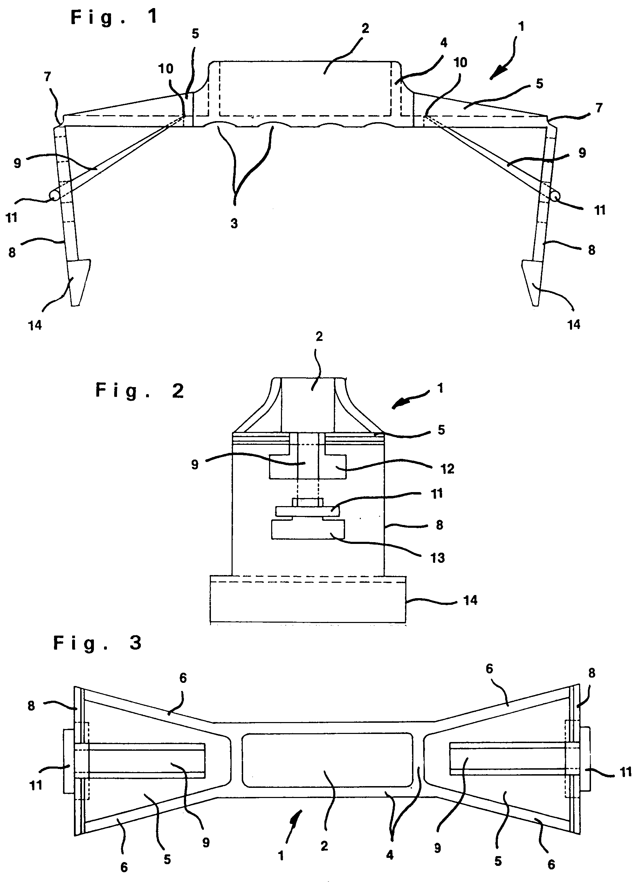

Wie insbesondere Fig. 2 erkennen läßt, ist in jedem Seitenstück 5 ein bis in den zugehörigen Tragarm 8 hineinreichender erster T-förmiger Ausschnitt 12 und in einem Abstand dazu im Tragarm 8 ein zweiter T-förmiger Ausschnitt 13 vorgesehen. In abwärts geschwenkter Position des Tragarmes 8 läßt sich das knebelförmige Endstück 11 durch den Flanschbereich des Ausschnittes 13 hindurchführen, so daß nach einer Verschiebung der Lasche 9 in den Stegbereich des Ausschnittes 13 das knebelförmige Endstück 11 verriegelt ist. Am jeweiligen unteren Ende der Tragarme 8 ist eine Leiste 14 angeformt, die sich über die Breite des Tragarmes 8 erstreckt und mit einer Längsseite zur Vorrichtungsmitte hin vorsteht. Die Leisten 14 sind im Querschnitt keilförmig ausgebildet und spiegelbildlich so angeordnet, daß sie unter geringfügiger Vergrößerung des Abstandes der Tragarmenden über einen seitlich vorstehenden Deckelrand einer nicht dargestellten Batterie gleiten, bis die Leisten 14 mit ihrer Auflageseite das Niveau der Unterseite des Deckelrandes erreicht haben, worauf durch die elastische Vorspannung der Tragarme 8 die Leisten 14 aufeinander zu unter den Deckelrand greifen und in dieser Position gehalten werden.

## Patentansprüche

1. Vorrichtung zum Erfassen und Transportieren eines quaderförmigen Gegenstandes, insbesondere einer Batterie, gekennzeichnet durch einen einstückig aus Kunststoff geformten Tragbügel mit einem zu einem Handgriff ausgebildeten Mittelstück (2), dessen Enden jeweils in ein Seitenstück (5) übergehen, an dem ein Tragarm (8) und eine Lasche (9) über je ein Gelenk (10) angeschlossen sind und der Tragarm (8) in einer abwärts gerichteten Schwenkposition mit dem freien Ende der Lasche (9) kuppelbar und so verriegelbar ist, daß eine am unteren Ende des Tragarmes (8) angeformte Aufnahmeleiste (14) mit einer Längsseite zur Vorrichtungsmitte hin vorsteht.

2. Vorrichtung nach Anspruch 1, dadurch gekennzeichnet, daß jedes Seitenstück (5) in der Breite von seinem am Mittelstück (2) angeschlossenen Ende aus bis zu seinem mit dem Tragarm (8) gelenkig verbundenen Ende hin zunimmt und im Mittelstück (2) ein bis in den Tragarm (8) hineinreichender erster Ausschnitt (12) zur Plazierung einer Lasche (9) im gestreckten Zustand der Vorrichtung und im Tragarm (8) ein zweiter Ausschnitt (13) zum Hindurchführen des Endes der Lasche (9) in der abwärtsgerichteten Schwenkposition des Tragarmes (8) vorgesehen ist.

3. Vorrichtung nach Anspruch 1 oder 2, dadurch gekennzeichnet, daß die Ausschnitte (12, 13) eine T-förmige Kontur aufweisen und daß der T-Steg jedes ersten Ausschnittes (12) in abwärtsgerichteter Position des Tragarmes (8) nach oben weist und daß jeweils ein im gestreckten Zustand der Vorrichtung im ersten Ausschnitt plaziertes, knebelförmiges Endstück (11) der Lasche (9) von einer Seite aus durch den T-Flansch des zweiten Ausschnittes (13) hindurchführbar und nach einer aufwärts gerichteten Schwenkbewegung der Lasche (9) bis in den T-Steg hinein auf der anderen Seite der Lasche (9) verriegelbar ist.
